# EUROPEAN PATENT APPLICATION

(11) **EP 2 590 377 A1**
(43) Date of publication of application: **08.05.2013**
(21) Application number: 11800184.1
(22) Date of filing: 29.06.2011
(51) Int. Cl.: H04L 29/06

(54) **CALL PROCESSING METHOD AND MEDIA GATEWAY**

(30) Priority: 30.06.2010 CN 201010219996
(71) Applicant: ZTE Corporation, Shenzhen, Guangdong 518057 (CN)
(72) Inventor: YU, Xiaowen, Shenzhen Guangdong 518057 (CN); LUO, Song, Shenzhen Guangdong 518057 (CN)
(74) Representative: Price, Nigel John King
(86) International application number: PCT/CN2011/076598
(87) International publication number: WO 2012/000439

(57) **Abstract**

The disclosure discloses a call processing method and a media gateway. The method comprises the steps of: determining, by a media gateway, the protocol interface interruption; when a user of the media gateway off-hooks and dials, sending, by the media gateway, an initial message, wherein the identification information of the user making the call and called user number information that the user calls are carried in the initial message; other media gateways connected with the media gateway receiving the initial message and performing call processing according to the identification information and the called user number information. With the disclosure, the reliability of the user call between the media gateways is improved; meanwhile, the device cost of the media gateway is lowered.

## Description

### Field of the Invention

The disclosure relates to the field of communication, and in particular to a call processing method and a media gateway.

### Background of the invention

In the Next Generation Network (NGN) or the Internet Protocol Multimedia Subsystem (IMS) network, a media gateway accomplishes the call process under the control of Soft Switch (SS) or Call Session Control Function (CSCF).

With the continuous development and evolution of the NGN network, based on various considerations of the operators about the operation condition, the user access device tends to become more and more small-sized. A plurality of small-sized media gateways are deployed in the NGN or IMS core network device. Each media gateway accesses the core network through the H.248 or Session Initiation Protocol (SIP) interfaces, and the call between the media gateways is forwarded by the core network.

However, the core network device may cause communication loss between the media gateway and the core network device due to various reasons, such as protocol interface interruption.

For example, for the important large enterprise user, the large number of users inside the enterprise network may be deployed in many different media gateways. If a protocol service interface between a media gateway and the core network device interrupts, the media gateway is basically isolated from the enterprise network. In this way, the user in the gateway can not communicate with other users in the enterprise network.

At present, in the condition that the media gateway device loses communication with the core network control device, the media gateway can perform internal switch. However, the switch scope is limited to be inside the media gateway device. For the call interruption between the media gateway and other media gateways, even though the present media gateway device would be provided with an escape interface, an extra hardware interface is needed and an extra external network interface is needed too. Thus, the device cost is increased, and the complexity of networking and network administrator is increased too.

### Summary of the Invention

The main object of the disclosure is to provide a call processing method and a media gateway to solve the problem of high device cost caused by communication interruption or additional escape interface.

In order to achieve the object above, according to one aspect of the disclosure, a call processing method is provided.

Call processing method comprises: determining, by a media gateway, that a protocol interface of the media gateway is interrupted; when a user of the media gateway off-hooks and dials, querying, by the media gateway, other media gateways connected with the media gateway; sending, by the media gateway, an initial message, wherein the initial message carries identification information of the user making the call and called user number information that the user calls; and other media gateways connected with the media gateway receiving the initial message and performing call processing according to the call identification information and the called user number information.

Before determining, by the media gateway, that the protocol interface of the media gateway is interrupted, the method further comprises: configuring, by the media gateway, an internal user number; and configuring, by the media gateway, a matching table of user numbers of said other media gateways connected with the media gateway.

Said other media gateways performing call processing according to the identification information and the called user number information comprises: judging, by said other media gateways, whether the called user number information matches the matching table; if it is judged that the called user number information matches the matching table, determining that a user corresponding to the called user number information is a user of said other media gateways, and further judging whether the user corresponding to the called user number information is idle; and if it is judged to be idle, sending call success information to the media gateway; and if it is judged to be not idle, sending call failure information to the media gateway.

After said other media gateways performing call processing according to the identification information and the called user number information, the method further comprises: the media gateway receiving the call success information and establishing a communication connection for the user of the media gateway and the user of said other media gateways.

After said other media gateways performing call processing according to the identification information and the called user number information, the method further comprises: the media gateway receiving the call failure information and ending the call of the user of the media gateway.

In order to achieve the object above, according to another aspect of the disclosure, a media gateway is provided.

The media gateway according to the disclosure comprises: a determination module, configured to determine that a protocol interface of the media gateway is interrupted; a query module, configured to, when a user of the media gateway off-hooks, query other media gateways connected with the media gateway in which the query module is located; a sending module, configured to send an initial message, wherein the initial message carries identification information of the user making the call and called user number information that the user calls; a receiving module, configured to receive the initial message sent by said other connected media gateways; and a processing module, configured to perform call processing according to the identification information and the called user number information.

The media gateway further comprises: a first configuration module, configured to configure an internal user number; and a second configuration module, configured to configure a matching table of user numbers of said other media gateways connected with the media gateway.

The processing module comprises: a first judgment sub-module, configured to judge whether the called user number information matches the matching table; a determination sub-module, configured to, if the first judgment sub-module judges that the called user number information matches the matching table, determine that a user corresponding to the called user number information is the user of said other media gateways; a second judgment sub-module, configured to judge whether the user corresponding to the called user number information is idle; a first sending sub-module, configured to, if the second judgment sub-module judges that the user corresponding to the called user number information is idle, send call success information to the media gateway; and a second sending sub-module, configured to, if the second judgment sub-module judges that the user corresponding to the called user number information is not idle, send call failure information to the media gateway.

The device above further comprises: a connection module, configured to, when receiving the call success information, establish a communication connection for the user of the media gateway and the user of said other media gateways.

The device above further comprises: an ending module, configured to, when receiving the call failure information, end the call of the user of the media gateway.

In the disclosure, a media gateway is adopted to determine that a protocol interface of the media gateway is interrupted. When a user of the media gateway off-hooks and dials, the media gateway sends an initial message to other media gateways, wherein the identification information of the user making the call and the called user number information are carried in the initial message. Then said other media gateways connected with the media gateway receive the initial message and perform call processing according to the identification information and the called user number information. Thus the problem of high device cost caused by communication interruption or additional escape interface after a protocol interface interrupts in the conventional art is solved. The reliability of the user call between the media gateways is improved, and the device cost of the media gateway is lowered.

### Brief Description of the Drawings

The drawings described herein are provided for a further understanding of the disclosure, and constitute one part of the application. The embodiments of the disclosure and the description thereof are used to illustrate the disclosure but to improperly limit the disclosure. In the drawings:
Fig. 1 shows a network structure diagram according to the embodiment of the disclosure;
Fig. 2 shows a flowchart of a call processing method according to the embodiment of the disclosure;
Fig. 3 shows a flowchart of a call processing judgment according to the embodiment of the disclosure;
Fig. 4 shows a flowchart of a number matching process according to the embodiment of the disclosure;
Fig. 5 shows a flowchart for querying the location of a called user according to the embodiment of the disclosure;
Fig. 6 shows a flowchart for processing a called location query message sent from a calling gateway by other gateways according to the embodiment of the disclosure;
Fig. 7 shows a flowchart of call processing across gateways according to the embodiment of the disclosure;
Fig. 8 shows a structure block diagram of a media gateway according to the embodiment of the disclosure; and
Fig. 9 shows a preferred structure block diagram of a media gateway according to the embodiment of the disclosure.

### Detailed Description of the Embodiments

The disclosure is described hereinafter in detail by reference to the drawings and in conjunction with the embodiments. It should be noted that the embodiments in the application and the features of the embodiments can be combined with each other if no conflict is caused.

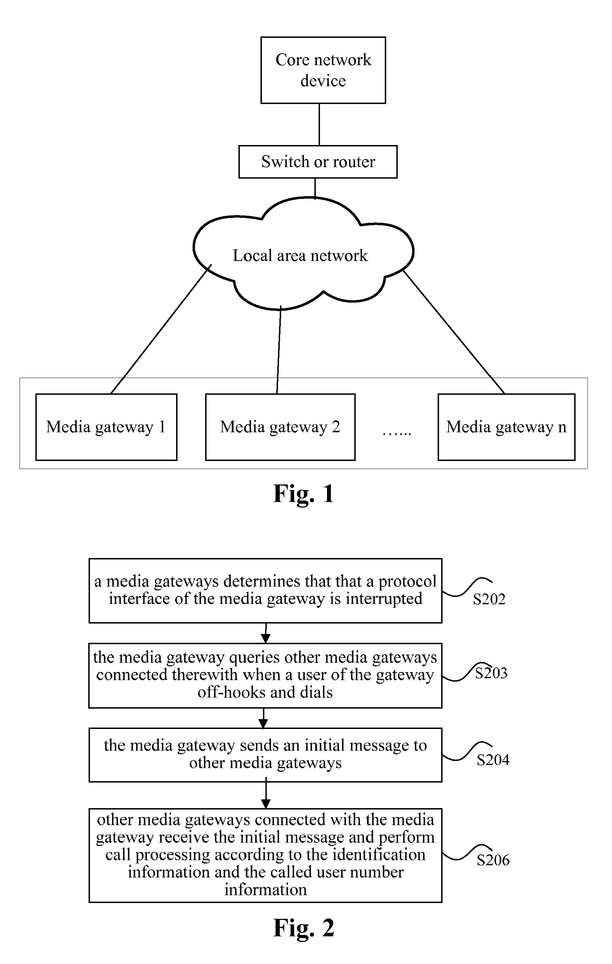

Fig. 1 shows a network structure diagram according to the embodiment of the disclosure. As shown in Fig. 1, multiple media gateways are located in the same local area network. The uplink is connected to the core network device through a router or an Ethernet switch. In normal conditions, each media gateway directly performs protocol interaction with the core network device. In the embodiment of the disclosure, if an upper layer protocol interface between a media gateway and the core network interrupts, all media gateways in the cluster adopt the call processing method described in the embodiment below to perform the internal call processing.

### Embodiment 1

In Embodiment 1, a call processing method is provided. Fig. 2 shows a flowchart of a call processing method according to the embodiment of the disclosure. As shown in Fig. 2, the call processing method comprises the following steps.

Step S202: a media gateway determines that that a protocol interface of the media gateway is interrupted.

Step S203: the media gateway queries other media gateways connected with the media gateway.

In step S203, the query method can be that querying the information of other media gateways from the system network administrator, and can also be that pre-configuring the information of other media gateways when the media gateway configures data.

Step S204: when a user of the media gateway off-hooks, the media gateway sends an initial message, wherein the identification information of the user making the call and the called user number information are carried in the initial message.

Step S206: other media gateways connected with the media gateway receive the initial message and perform call processing according to the identification information and the called user number information.

Through the steps above, in the condition that the media gateway determines that a protocol interface of the media gateway is interrupted, call processing is performed by receiving an initial message. Thus the problem of high device cost caused by communication interruption or additional escape interface after a protocol interface interrupts in the conventional art is solved. The reliability of the user call between the media gateways is improved, and the device cost of the media gateway is lowered.

Preferably, before Step S202, the call processing method further comprises: the media gateway configuring an internal user number; and the media gateway configuring a matching table of the user numbers of other media gateways connected with the media gateway. Through the configuration steps in the preferred embodiment, the configuration of the internal user number of the media gateway and the matching table of the user numbers of other media gateways connected with the media gateway guarantees the user call between media gateways.

Hereinafter, a preferred implementation is illustrated for the step that other media gateways perform call processing according to the identification information and the called user number information in step S206. In the preferred implementation, other media gateways judge whether the called user number information matches the matching table. If it is judged that the called user number information matches the matching table, it is determined that the user corresponding to the called user number information is the user of other media gateways. Then, it is further judged whether the user corresponding to the called user number information is idle. If it is judged to be idle, the call success information is sent to the media gateway. If it is judged to be not idle, the call failure information is sent to the media gateway. Through the first judgment step in the preferred embodiment, it can be judged whether the call is a call made to a user inside this media gateway according to the matching table. Through the second judgment step, according to whether the user is idle, the call success or failure information is sent to the media gateway to judge whether to establish a connection for the call, so as to realize the communication between media gateways.

Preferably, after other media gateways perform call processing according to the identification information and the called user number information, the method further comprises: the media gateway receiving the call success information and establishing a communication connection for the user of the media gateway and the user of other media gateways. Through the establishment step in the preferred embodiment, user communication between media gateways is realized.

Preferably, after other media gateways perform call processing according to the identification information and the called user number information, the method further comprises: the media gateway receiving the call failure information and ending the call of the user of the media gateway. Through the ending step in the preferred embodiment, when a called user is in non-idle state, the calling user ends the call. Thus, the reliability of the user communication between media gateways is improved.

### Embodiment 2

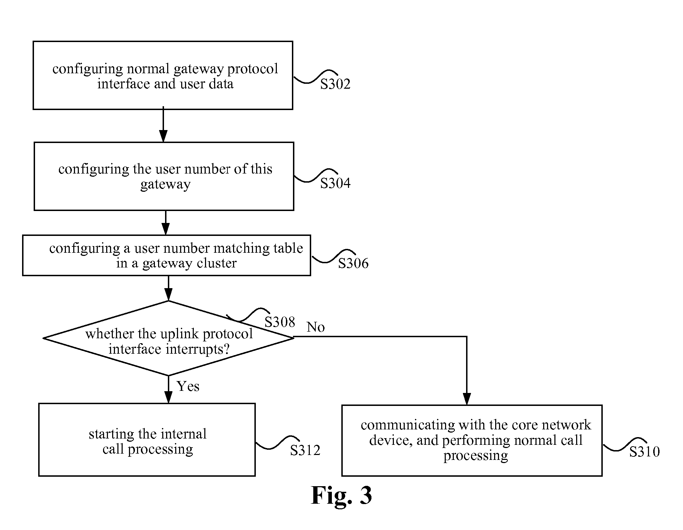

Fig. 3 shows a flowchart of a call processing judgment according to the embodiment of the disclosure, comprising the following steps.

Step S302: normal gateway protocol interface and user data are configured.

Step S304: the user number of this gateway is configured.

Step S306: a user number matching table in a gateway cluster is configured.

Step S308: the media gateway judges whether the protocol interface is interrupted; if not, execute step S31 0, otherwise, execute step S312.

Step S310: the core network device is normally interacted with, and the flow is ended.

Step S312: the internal call processing (the call processing flow in Embodiment 3 and Embodiment 4) is started, and the flow is ended.

Through the preferred embodiment, it is judged whether the protocol interface of the media gateway is interrupted. If yes, the method of performing call processing through other media gateways described in the preferred embodiment of the disclosure is adopted.

### Embodiment 3

The location query of the called user is realized in the embodiment. It should be noted that in the embodiment the calling gateway receives a calling off-hook message, allocates a speech channel timeslot and a number receiver, connects the dial tone and the number receiver for the calling user, sets a timer and waits to receive the number. When receiving a first digit dialed by the user, the gateway cuts off the dial tone and performs number matching according to a number matching table. There are three possible matching results:
first: the number matching fails, then this call fails; and the calling user hears a busy tone and this call is ended after the user hangs up;
second: it is needed to continue receiving number; and waiting for user dialing; and
third: the number matching succeeds, then it is judged whether the called number is a user inside this gateway; if yes, go to call processing flow inside the gateway; and no further description is repeated here.

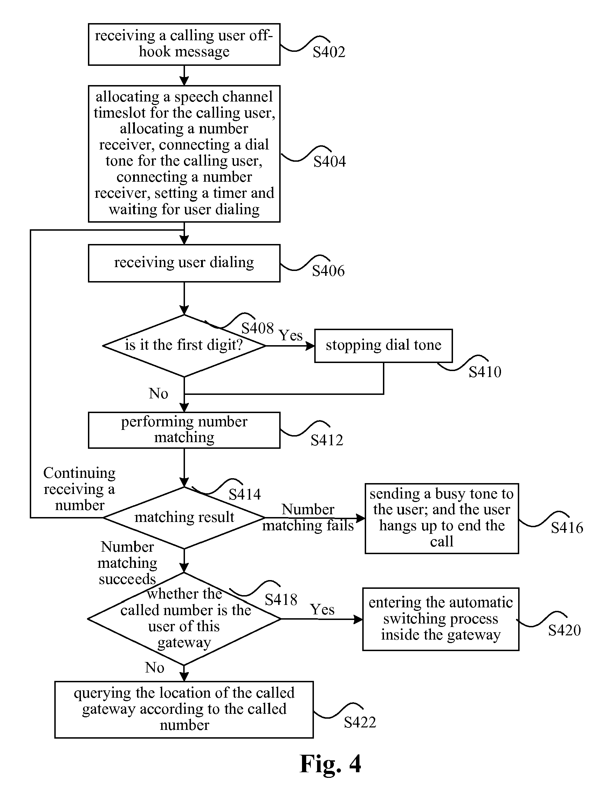

Fig. 4 shows a flowchart of a number matching process according to the embodiment of the disclosure. As shown in Fig. 4, the flow process comprises the following steps.

Step S402: a calling user off-hook message is received.

Step S404: a speech channel timeslot is allocated for the calling user, a number receiver is allocated, a dial tone is connected for the calling user, a number receiver is connected, a timer is set and user dialing is waited for.

Step S406: user dialing is received.

Step S408: is it the first digit? If yes, execute step S410, otherwise, execute step S412.

Step S410: dial tone is stopped and the flow is ended.

Step S412: number matching is performed.

Step S414: the matching result is judged; if the number matching fails, execute step S416; if the number matching succeeds, execute step S418; if the second matching result occurs, it is needed to continue receiving a number, and execute step S406.

Step S416: a busy tone is sent to the user; the user hangs up to end the call; and the flow is ended.

Step S418: whether the called number is the user of this gateway is judged; if yes, execute step S420; otherwise, execute step S422.

Step S420: the automatic switching process inside the gateway is entered; and the flow is ended.

Step S422: the location of the called gateway is queried according to the called number; and the flow is ended.

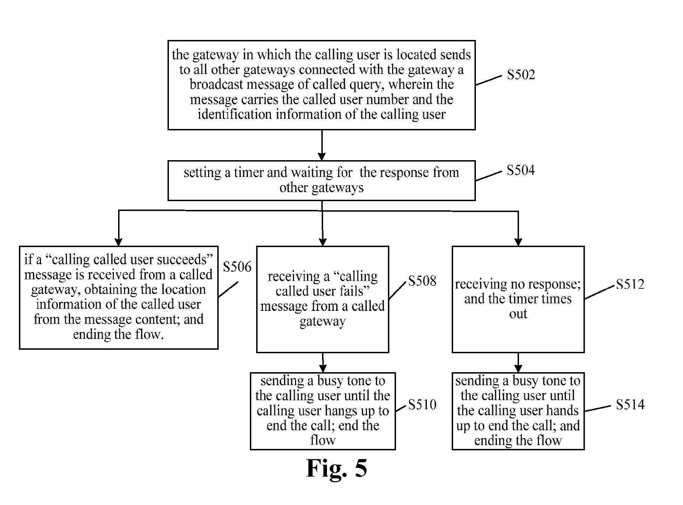

Fig. 5 shows a flowchart for querying the location of a called user according to the embodiment of the disclosure. As shown in Fig. 5, the flow comprises the following steps.

Step S502: the gateway in which the calling user is located sends to all other gateways connected with the gateway an initial message of called query, wherein the message carries the called user number and the identification information of the calling user.

Step S504: a timer is set and the response from other gateways is waited for.

The following steps S506 to S510 are the corresponding process performed according to the response result.

Step S506: if a "calling called user succeeds" message is received from the called gateway, the location information of the called user is obtained from the message content; and the flow is ended.

Step S508: a "calling called user fails" message is received from the called gateway.

Step S510: a busy tone is sent to the calling user until the calling user hangs up to end the call; and the flow is ended.

Step S512: no response is received; and the timer times out.

Step S514: a busy tone is sent to the calling user until the calling user hangs up to end the call; and the flow is ended.

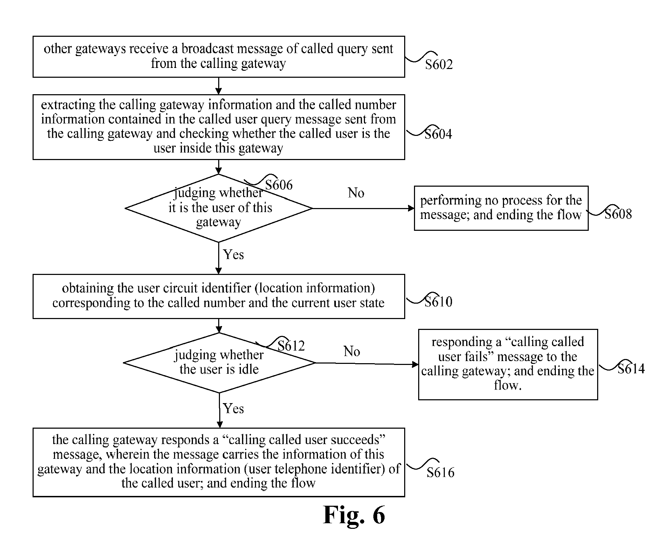

Fig. 6 shows a flowchart for processing a called location query message sent from a calling gateway by other gateways according to the embodiment of the disclosure. As shown in Fig. 6, the flow comprises the following steps.

Step S602: other gateways receive an initial message of called query from the calling gateway.

Step S604: the calling gateway information and the called number information contained in the called user query message sent from the calling gateway are extracted and whether the called user is the user inside this gateway is checked.

Step S606: whether it is the user of this gateway is judged; if yes, execute step S608; otherwise, execute step S610.

Step S608: no process for the message is performed; and the flow is ended.

Step S610: the user circuit identifier (location information) corresponding to the called number and the current user state are obtained.

Step S612: whether the user is idle is judged; if not, execute step S614; otherwise, execute step S616.

Step S614: a "calling called user fails" message is responded to the calling gateway; and the flow is ended.

Step S616: the calling gateway responds a "calling called user succeeds" message, wherein the message carries the location information of the called user; and the flow is ended.

### Embodiment 4

In the embodiment, it is implemented that, after the calling gateway obtains the information of the gateway in which the called user is located, the calling gateway performs call connection across gateways.

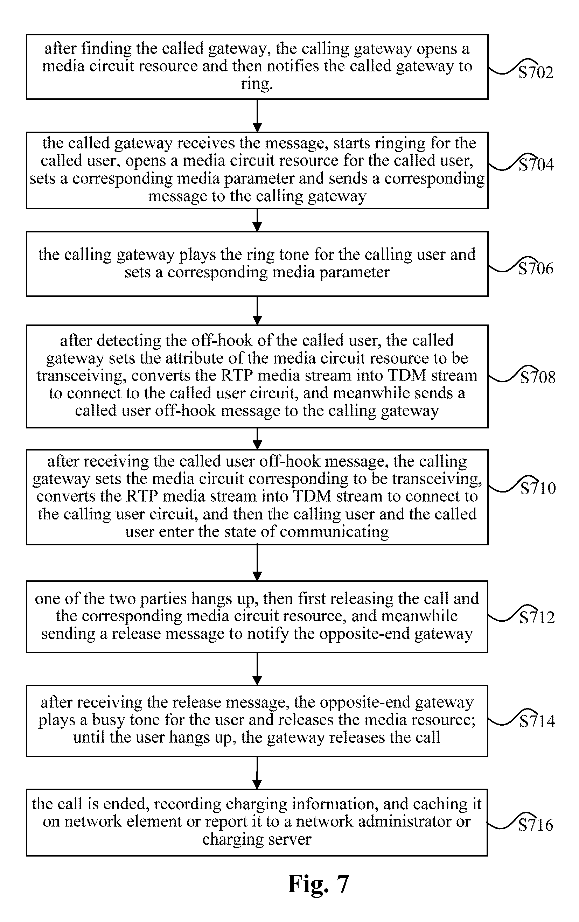

Fig. 7 shows a flowchart of call processing across gateways according to the embodiment of the disclosure. As shown in Fig. 7, the flow comprises the following steps.

Step S702: after finding the called gateway, the calling gateway first obtains a media circuit resource, and then sends a ringing message to the called gateway, wherein the message carries the circuit identifier of the calling user, the called user number information, the IP address and port number of the calling media stream.

Step S704: the called gateway receives the ringing message, finds a circuit number corresponding to the called user according to the called number, obtains a media circuit resource for the called user and then sends a response message to the calling gateway, wherein the message carries the circuit identifier of the called user, the IP address and port number of the called media stream; and ringing for the called user is started.

Step S706: after receiving a called ringing success response message, the calling gateway plays the ring tone for the calling user and records the information in the message, such as the identifier of the called user, the IP address and port number of the opposite-end media stream etc.

Step S708: when the called user off-hooks, after detecting the off-hook, the called gateway sets the attribute of the media circuit resource to be transceiving, sets the address and port number of the opposite-end RTP stream to be the IP address and port number of the calling media stream, converts the RTP media stream into TDM voice stream to connect to the called user circuit, and meanwhile sends a called user off-hook message to the calling gateway.

Step S710: after receiving the called user off-hook message, the calling gateway sets the media circuit resource corresponding to the calling user to be transceiving, sets the address and port number of the opposite-end RTP stream to be the IP address and port number of the called media stream, converts the RTP media stream into TDM voice stream to connect to the calling user circuit, and then the calling user and the called user enter the state of communicating.

Step S712: if one of the two communicating parties hangs up, first the call and the corresponding media circuit resource are released, and meanwhile a release message is sent to notify the opposite-end gateway.

Step S714: after receiving the release message, the opposite-end gateway plays a busy tone for the user and releases the media resource; until the user hangs up, the gateway releases the call.

Step S716: after the call is ended, the calling gateway generates a call bill which includes the calling number, the called number, the call time and the end time, wherein the call bill can be temporarily stored in the media gateway, and also can be transmitted to a network administrator or charging server.

Through the preferred embodiment, after the calling gateway obtains the information of the gateway in which the called user is located, the calling gateway performs a call connection across gateways.

### Embodiment 5

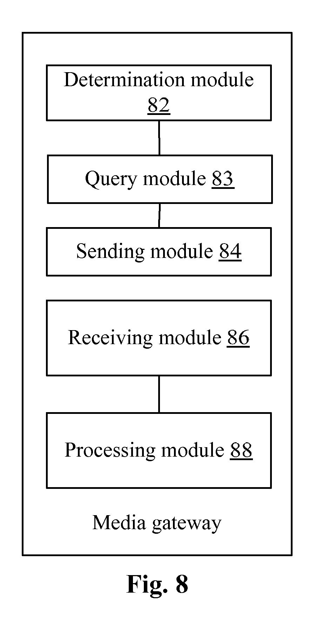

Embodiment 5 combines Embodiment 1 and the preferred implementation therein. In Embodiment 5, a media gateway is provided. Fig. 8 shows a structure block diagram of a media gateway according to the embodiment of the disclosure. As shown in Fig. 8, the media gateway comprises: a determination module 82, a query module 83, a sending module 84, a receiving module 86 and a processing module 88. The structure above is described below in detail.

The determination module 82 is configured to determine that a protocol interface of the media gateway is interrupted; the query module 83 is connected to the determination module 82 and is configured to, when a user of the media gateway off-hooks and dials, query other media gateways connected with the media gateway in which the query module 83 is located in the condition that the determination module 82 determines that that a protocol interface of the media gateway is interrupted; the sending module 84 is connected to the query module 83 and is configured to send an initial message to other media gateways queried by the query module 83, wherein the identification information of the user making the call and the called user number information that the user calls are carried in the initial message; the receiving module 86 is connected to the sending module 84 and is configured to receive the initial message sent to other connected media gateways by the sending module 84; and the processing module 88 is connected to the receiving module 86 and is configured to perform call processing according to the identification information and the called user number information received by the receiving module 86.

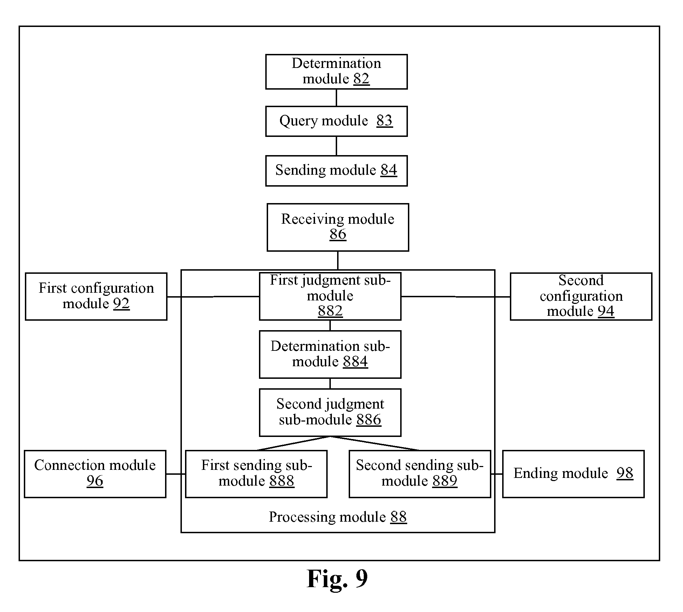

Fig. 9 shows a preferred structure block diagram of a media gateway according to the embodiment of the disclosure. As shown in Fig. 9, the media gateway further comprises: a first configuration module 92, a second configuration module 94, a connection module 96 and an ending module 98, wherein the processing module 88 comprises: a first judgment sub-module 882, a determination sub-module 884, a second judgment sub-module 886, a first sending sub-module 888 and a second sending sub-module 889. The structure above is described below in detail.

The first configuration module 92 is configured to configure an internal user number; and
the second configuration module 94 is configured to configure a matching table of the user numbers of other media gateways connected with this media gateway.

The processing module 88 comprises: a first judgment sub-module 882 which is connected to the first configuration module 92 and the second configuration module 94 and is configured to judge whether the called user number information matches the matching table configured by the second configuration module 94; a determination sub-module 884 which is connected to the first judgment sub-module 882 and is configured to, if it is judged that the called user number information matches the matching table by the first judgment sub-module 882, determine that the user corresponding to the called user number information is the user of other media gateways; a second judgment sub-module 886 which is connected to the determination sub-module 884 and is configured to, when the determination sub-module 884 determines that the user corresponding to the called user number information is the user of other media gateways, judge whether the user corresponding to the called user number information is idle; a first sending sub-module 888 which is connected to the second judgment sub-module 886 and is configured to, if it is judged by the second judgment sub-module 886 that the user corresponding to the called user number information is idle, send the call success information to the media gateway; and a second sending sub-module 889 which is connected to the second judgment sub-module 886 and is configured to, if it is judged by the second judgment sub-module 886 that the user corresponding to the called user number information is not idle, send the call failure information to the media gateway.

The connection module 96 is connected to the first sending sub-module 888 and is configured to, when receiving the call success information sent by the first sending sub-module 888, establish a communication connection for the user of the media gateway and the user of other media gateways.

The ending module 98 is connected to the second sending sub-module 889 and is configured to, when receiving the call failure information sent by the second sending sub-module 889, end the call of the user of the media gateway.

Through the above embodiments of the disclosure, in the condition that the media gateway determines that a protocol interface of the media gateway is interrupted, call processing is performed by receiving an initial message. Thus the problem of high device cost caused by communication interruption or additional escape interface after a protocol interface interrupts in the conventional art is solved. The reliability of the user call between the media gateways is improved, and meanwhile the device cost of the media gateway is lowered.

Obviously, those skilled in the art should understand that the above module or steps of the present invention can be implemented using a general-purpose computing apparatus. And they can be integrated on a single computing apparatus or distributed over a network consisted of multiple computing apparatus. Optionally, they can be implemented using computing apparatus executable program code. Thus, they can be stored in a storage for being executed by the computing apparatus. In some cases, the shown or described steps can be performed in an order different from the order here. Or, they can be made into various integrated circuit modules respectively, or some modules or steps therein are made into a single integrated circuit module for implementation. In this way, the present invention is not limited to any particular combination of hardware and software.

The above is only the preferred embodiments of the disclosure and are not intended to limit the disclosure. For those skilled in the art, various modifications and changes can be made to the disclosure. Any modification, equivalent substitute and improvement within the spirit and principle of the disclosure are deemed to be included within the scope of the disclosure.

## Claims

1. A call processing method, **characterized by** comprising:
determining, by a media gateway, that a protocol interface of the media gateway is interrupted;
when a user of the media gateway off-hooks and dials, querying, by the media gateway, other media gateways connected with the media gateway;
sending, by the media gateway, an initial message, wherein the initial message carries identification information of the user making the call and called user number information that the user calls; and
other media gateways connected with the media gateway receiving the initial message and performing call processing according to the call identification information and the called user number information.

2. The method according to claim 1, **characterized in that** before determining, by the media gateway, that the protocol interface of the media gateway is interrupted, the method further comprises:
configuring, by the media gateway, an internal user number; and
configuring, by the media gateway, a matching table of user numbers of said other media gateways connected with the media gateway.

3. The method according to claim 2, **characterized in that** said other media gateways performing the call processing according to the identification information and the called user number information comprises:
judging, by said other media gateways, whether the called user number information matches the matching table;
if it is judged that the called user number information matches the matching table, determining that a user corresponding to the called user number information is a user of said other media gateways, and further judging whether the user corresponding to the called user number information is idle; and
if it is judged to be idle, sending call success information to the media gateway; and if it is judged to be not idle, sending call failure information to the media gateway.

4. The method according to claim 3, **characterized in that** after said other media gateways perform the call processing according to the identification information and the called user number information, the method further comprises:
the media gateway receiving the call success information and establishing a communication connection for the user of the media gateway and the user of said other media gateways.

5. The method according to claim 3, **characterized in that** after said other media gateways perform call processing according to the identification information and the called user number information, the method further comprises:
the media gateway receiving the call failure information and ending the call of the user of the media gateway.

6. A media gateway, **characterized by** comprising:
a determination module, configured to determine that a protocol interface of the media gateway is interrupted;
a query module, configured to, when a user of the media gateway off-hooks, query other media gateways connected with the media gateway in which the query module is located;
a sending module, configured to send an initial message, wherein the initial message carries identification information of the user making the call and called user number information that the user calls;
a receiving module, configured to receive the initial message sent by said other connected media gateways; and
a processing module, configured to perform call processing according to the identification information and the called user number information.

7. The media gateway according to claim 6, **characterized by** further comprising:
a first configuration module, configured to configure an internal user number; and
a second configuration module, configured to configure a matching table of user numbers of said other media gateways connected with the media gateway.

8. The media gateway according to claim 7, **characterized in that** the processing module comprises:
a first judgment sub-module, configured to judge whether the called user number information matches the matching table;
a determination sub-module, configured to, if the first judgment sub-module judges that the called user number information matches the matching table, determine that a user corresponding to the called user number information is the user of said other media gateways;
a second judgment sub-module, configured to judge whether the user corresponding to the called user number information is idle;
a first sending sub-module, configured to, if the second judgment sub-module judges that the user corresponding to the called user number information is idle, send call success information to the media gateway; and
a second sending sub-module, configured to, if the second judgment sub-module judges that the user corresponding to the called user number information is not idle, send call failure information to the media gateway.

9. The media gateway according to claim 8, **characterized by** further comprising:
a connection module, configured to, when receiving the call success information, establish a communication connection for the user of the media gateway and the user of said other media gateways.

10. The media gateway according to claim 8, **characterized by** further comprising:
an ending module, configured to, when receiving the call failure information, end the call of the user of the media gateway.
